# EUROPEAN PATENT APPLICATION

(11) **EP 2 123 992 A2**
(43) Date of publication of application: **25.11.2009**
(21) Application number: 09006363.7
(22) Date of filing: 12.05.2009
(51) Int. Cl.: F24J 2/24, F24J 2/46, F24J 2/50

(54) **Solar energy absorber**

(30) Priority: 21.05.2008 JP 2008158507; 12.09.2008 JP 2008235241
(71) Applicant: Nishihara, Hidetsugu, Suzaka-shi Nagano 382-0015 (JP)
(72) Inventor: Nishihara, Hidetsugu, Suzaka-shi Nagano 382-0015 (JP)
(74) Representative: Fechner, Benjamin

(57) **Abstract**

A solar energy absorber capable of reducing weight, being directly connected to a water supply pipe, etc.. The solar energy absorber comprises: a water-flowing section including heat collection tubes (B), which are composed of stainless steel, and connecting pipes (C); a heat-retaining box (D) accommodating the water-flowing section (B, C), including a heat insulating material (F) and having an opening part; and a cover plate (A) being composed of a transparent multilayer plastic and closing the opening part of the heat-retaining box (D). The heat collection tubes (B) are arranged parallel. End plates (G) closing ends of the heat collection tubes (B) are connected to the connecting pipes (C). Each of the heat insulating tubes (B) is coated with a heat-absorbing layer. Parts of the heat collection tubes (B) which are located on the opposite side of the opening part contact the heat insulating material (F).

## Description

The present invention relates to a solar energy absorber capable of heating water with solar energy.

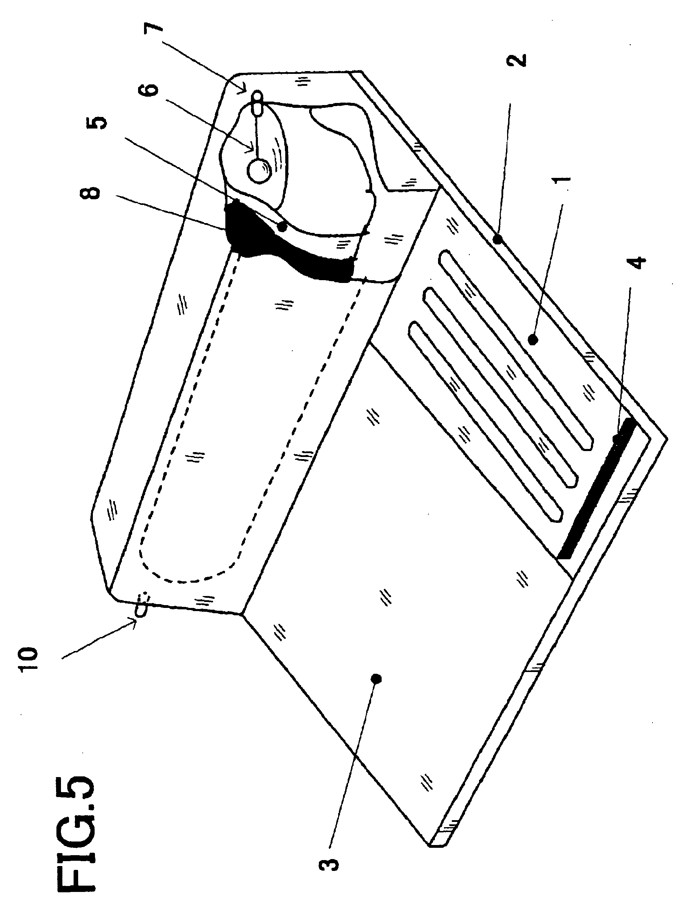

A conventional solar energy absorber is shown in Fig. 5. A cover plate 3 is a transparent glass plate. A heat collection section 1 is constituted by a plurality of stainless plates 9, which are mutually adhered. An inner bottom face and inner side faces are covered with an insulating material 4 composed of glass wool so as to keep temperature. The solar energy absorber is partially covered with a metal plate 2 and connected to a water storing tank 5, which is composed of polyethylene and covered with an insulating material 8 composed of polystyrene foam so as to keep temperature.

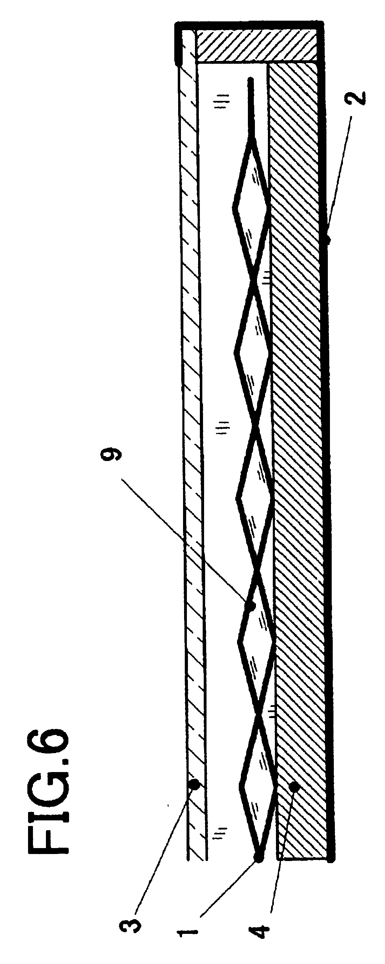

Fig. 6 shows a cross sectional view of the conventional solar energy absorber. The cover plate 3 is the transparent glass plate. In the heat collection section 1, the stainless plates 9 are mutually adhered to form hollow water paths. A heat collection surface of the solar energy absorber is coated with a heat-absorbing layer, i.e., heat-absorbing film, which is formed by, for example, applying a black coating material. The inner bottom face and inner side faces of the heat collection section 1 are covered with the insulating material 4, and the solar energy absorber is partially covered with the metal plate 2.

As shown in Fig. 5, a water supply pipe is connected to a water inlet 7 of a ball tap 6, which is usually used in a water tank of a flush toilet so as to set a water level, so as to fill the heat collection section 1 and the water storing tank 5 with water. Water is heated, in the heat collection section 1, with solar energy, and the heated water is stored in the water storing tank 5, and the heated water is naturally replaced with cool water.

The heated water is discharged from a water outlet 10, which is located in an upper part of the water storing tank 5. Even if the heated water is discharged, cool tap water whose amount is equal to that of the discharged water is supplied by the ball tap 6.

Another conventional solar energy absorber is disclosed in Japanese Laid-open Patent Publication No. P2004-205062A (see page 1 and Fig. 1). In the solar energy absorber, solar light is condensed at a heat collection section by a reflector. The solar energy absorber is integrated with a water storing tank and a cool/hot water supply unit. The light-condensing type solar energy absorber is capable of improving heat collection efficiency under a high-temperature condition and a cold weather condition. In this example too, the solar energy absorber is separated from the water storing tank.

The above described conventional solar energy absorbers have following problems:
(1) the transparent glass plate 3 is too heavy to treat;
(2) as shown in Fig. 6, the stainless plates 9 are mutually adhered, so the plates 9 cannot fully resist water pressure, the plates 9 will be deformed if water pressure of tap water is directly applied thereto, therefore the water pressure must be received by the ball tap 6 and the plates 9 must be separated from the tap water;
(3) water is supplied to the water storing tank 5 by the ball tap 6, the discharged hot water is pressurized by only level difference between the water level in the water storing tank 5 and a level of a water faucet, so pressure of the discharged hot water must be low;
(4) since the pressure of the discharged hot water is low, the hot water will flow back when the hot water is mixed with the cold tap water in, for example, a shower unit, further, in case that the solar energy absorber is connected to a boiler, a pressurizing pump must be required;
(5) since the stored water contacts air in the water storing tank 5, black mold will mold so the heated water must be unsanitary water; and
(6) as shown in Fig. 5, the water storing tank 5 is projected and causes disfigurement after setting, so the poor design have constricted popularization of the conventional solar energy absorbers.

Accordingly, it is an object in one aspect of the invention to provide a solar energy absorber capable of solving the above described problems of the conventional solar energy absorbers.

To achieve the object, the basic structure of the present invention is a solar energy absorber, which is capable of heating water with solar energy. The solar energy absorber of the invention comprises a water-flowing section including a plurality of heat collection tubes. The heat collection tubes are, for example, composed of non-corrosive and/or heat-absorbant material such as stainless steel. In an embodiment each of the heat collection tubes has an upper end and a lower end.

The water-flowing section further comprises an upper connecting pipe preferably provided with a plurality of ports each for fluid communication with an associated collection tube, wherein the upper connecting pipe is, e.g., provided as a branched connecting pipe. In an embodiment the upper connecting pipe is adapted to be essentially horizontally arranged or tilted. A diameter of the upper connecting pipe is smaller than a diameter of the heat collection tubes.

The water-flowing section further comprises a lower connecting pipe preferably provided with a plurality of ports each for fluid communication with an associated collection tube,
wherein the lower connecting pipe is, e.g., formed as a branched connecting pipe. In one embodiment, the lower connecting pipe is adapted to be essentially horizontally arranged or tilted. A diameter of the lower connecting pipe is smaller than a diameter of the heat collection tubes.

In one embodiment, the solar energy absorber comprises a heat-retaining housing, for example a box or an envelope, accommodating the water-flowing section. In an embodiment the heat-retaining housing, in particular the box, includes a heat insulating material and/or has an opening part which is located on a heat collection side.

In an embodiment, the solar energy absorber comprises a cover plate including or being composed of a transparent single- or multilayer plastic, the cover plate closing the opening part of the heat-retaining box, preferably without contacting the heat collection tubes.

In an embodiment, a plurality, preferably all, of the heat collection tubes are arranged essentially in parallel. In one embodiment, the upper ends of the heat collection tubes are respectively closed by upper end closures, in one embodiment provided as plates, the closures having a port for fluid communication with the upper connecting pipe. In an embodiment, the lower ends of the heat collection tubes are respectively closed by lower end closures, in one embodiment provided as plates, the closures having a port for fluid communication with the lower connecting pipe. The upper end plates are connected to the upper connecting pipe and/or the lower end plates are connected to the lower connecting pipe so as to integrate the heat collection tubes. In an embodiment, a fluid communication between connecting pipe and heat collection tube is enabled via adjoined ports.

In an embodiment, each of the heat collection tubes is coated with a heat-absorbing layer, whose heat-absorbing efficiency and heat loss preventing efficiency are high such that heat-absorbing efficiency and/or heat loss preventing efficiency are improved with respect to a case where the heat collection tube is not coated.

In an embodiment, parts of the heat collection tubes which are located on the opposite side of the heat collection side contact the heat insulating material.

In an embodiment, the end plates are adapted to integrate metal tubes or metal pipes having different diameters.

Thus, an embodiment of the present invention has the following structures.

Namely, the basic structure of the embodiment according to the present invention is a solar energy absorber, which is capable of heating water with solar energy, comprising:
a water-flowing section including a plurality of heat collection tubes, which are composed of stainless steel and
each of which has an upper end and a lower end, an upper connecting pipe, e.g., branched connecting pipe, which is horizontally arranged and whose diameter is smaller than that of the heat collection tubes, and a lower connecting pipe, e.g., branched connecting pipe, which is horizontally arranged and whose diameter is smaller than that of the heat collection tubes;
   a heat-retaining box accommodating the water-flowing section, the heat-retaining box including a heat insulating material and having an opening part which is located on a heat collection side; and
a cover plate being composed of a transparent multilayer plastic, the cover plate closing the opening part of the heat-retaining box without contacting the heat collection tubes,
wherein a plurality of the heat collection tubes are arranged in parallel,
wherein the upper ends of the heat collection tubes are respectively closed by upper end plates, the lower ends of the heat collection tubes are respectively closed by lower end plates, the upper end plates are connected to the upper connecting pipe and the lower end plates are connected to the lower connecting pipe so as to integrate the heat collection tubes,
wherein each of the heat insulating tubes is coated with a heat-absorbing layer, whose heat-absorbing efficiency and heat loss preventing efficiency are high, and
wherein parts of the heat collection tubes which are located on the opposite side of the heat collection side contact the heat insulating material.

Note that, the end plates are usually used, for example, to integrate metal tubes or metal pipes having different diameters. As a heat collection tubes' diameter and/or cross-section is larger than that of the connecting tubes, the water-flowing section is thereby adapted to provide a buffer and/or reservoir that stores water for heating and/or during heating and/or when heated. To the extent the water flowing section, in effect, provides such a reservoir, any water storing tank can be of small size when compared with a water storing tank for a conventional solar energy absorber of similar heat collection surface and/or heat absorbing capacity. In a preferred embodiment, the solar energy absorber is adapted for use without any water storing tank, wherein all reservoir is provided by the water flowing section of the solar energy absorber.

In the solar energy absorber, the heat insulating material may be a vacuum heat insulating material.

In the solar energy absorber, gaps between the heat collection tubes may be air-tightly sealed so as to restrain air convection.

In the solar energy absorber, the cover plate may include an intermediate hollow layer.

For example, the intermediate hollow layer can be air-tightly closed and depressurized.

By the above described structures, the present invention has at least the following effects:
(1) where the cover plate is composed of the transparent multilayer plastic a weight of the cover plate can be highly reduced, further where no water storing tank is required, in an embodiment a weight of the solar energy absorber can be highly reduced;
(2) where the water-flowing section is constituted by the heat collection tubes, the end plates and the connecting pipes, the water-flowing section can fully resist pressure of tap water, deformation can be prevented and the water-flowing section can be directly connected to a water supply pipe;
(3) since the water-flowing section can be directly connected to the water supply pipe, no ball tap is required and pressure of the discharged heated water can be increased to that of the tap water;
(4) since the water-flowing section can be directly connected to the water supply pipe, the problem of low pressure of the discharged heated water can be solved, flow back of the heated water can be prevented even when the heated water is mixed with the cold tap water in, for example, a shower unit, further, no pressurizing pump is required;
(5) since no water storing tank is required, no black mold molds so the heated water can be sanitary water; and
(6) since no water storing tank is required, the external shape of the solar energy absorber can be improved.

As described above, all of the problems of the conventional solar energy absorbers can be solved by the present invention. Especially, the problems of reducing weight, directly connecting to the water supply pipe and keeping temperature can be solved by the present invention.

The object and advantages of the invention will be realized and attained by means of the elements and combinations particularly pointed out in the claims.

It is to be understood that both the foregoing general description and the following detailed description are exemplary and explanatory and are not restrictive of the invention.

Embodiments of the present invention will now be described by way of examples and with reference to the accompanying drawings, in which:
- Fig. 1: is an explanation view showing an inner structure of a solar energy absorber of Example 1 relating to the present invention;
- Fig. 2: is a perspective view of a water-flowing section of the solar energy absorber thereof;
- Fig. 3: is a transverse sectional view of the solar energy absorber thereof;
- Fig. 4: is a longitudinal sectional view of the solar energy absorber thereof;
- Fig. 5: is an explanation view showing an inner structure of the conventional solar energy absorber;
- Fig. 6: is a transverse sectional view of the conventional solar energy absorber; and
- Fig. 7: is a transverse sectional view of a solar energy absorber of Example 2 relating to the present invention.

Preferred embodiments of the present invention will now be described in detail with reference to the accompanying drawings.

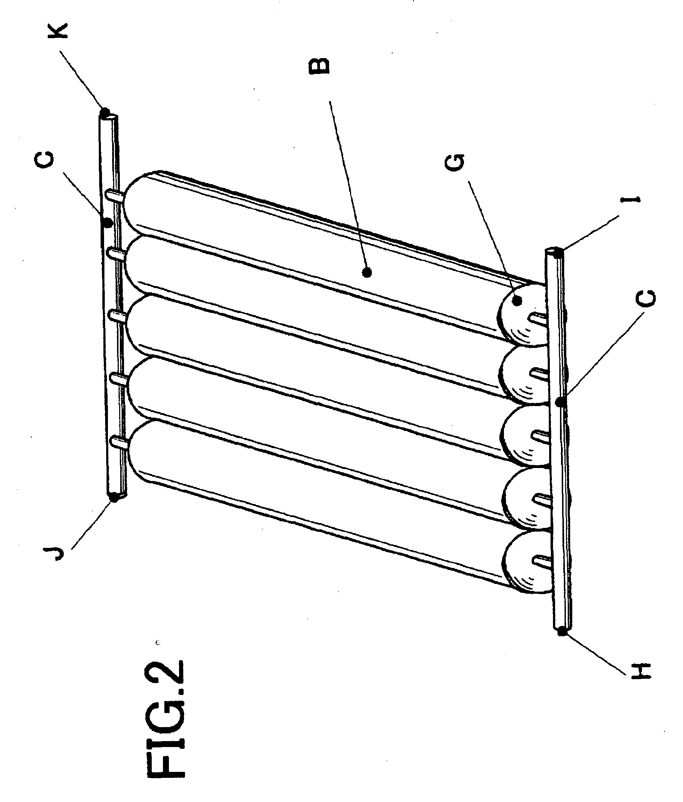

Firstly, as shown in Fig. 2, a plurality of heat collection tubes B, which are composed of stainless steel, are arranged parallel. End plates G are bonded to ends of the heat collection tubes B. The end plates G closing the upper ends of the heat collection tubes B are connected to one of connecting pipes (an upper header pipe which is horizontally arranged) C; the end plates G closing the lower ends of the heat collection tubes B are connected to the other connecting pipe (a lower header pipe which is horizontally arranged) C. With this structure, a water-flowing section is constituted by the heat collection tubes B, the end plates G and the header pipes C, which are integrated. Heat collection faces (upper parts of circumferential faces) of the heat collection tubes B are respectively coated with heat-absorbing layers, which are capable of selectively absorbing solar heat or energy.

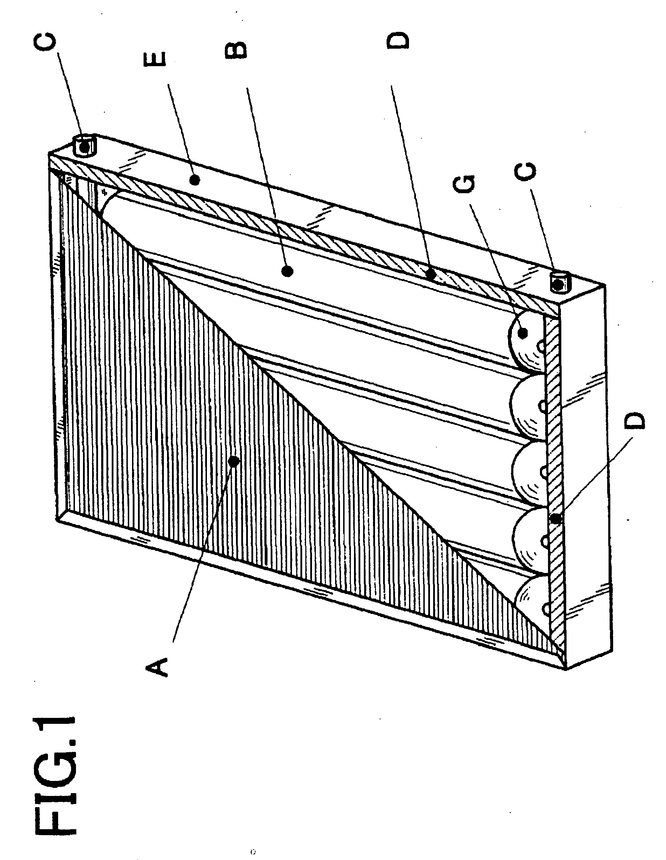

As shown in Fig. 1, the water-flowing section is accommodated in a heat-retaining (or -insulating) box D. The heat-retaining box D has an opening part, which is located on the heat collection side (upper side), and inner faces of the box D are composed of a heat insulating material. Lower parts (lower parts of the circumferential faces) of the heat collection tubes B, which are located on the opposite side of the heat collection side (the heat collection faces), contact the heat insulating material. A cover plate A, which is composed of a transparent multilayer plastic, closes the opening part of the heat-retaining box D without contacting the heat collection tubes B. The solar energy absorber of the present embodiment has the above described structure.

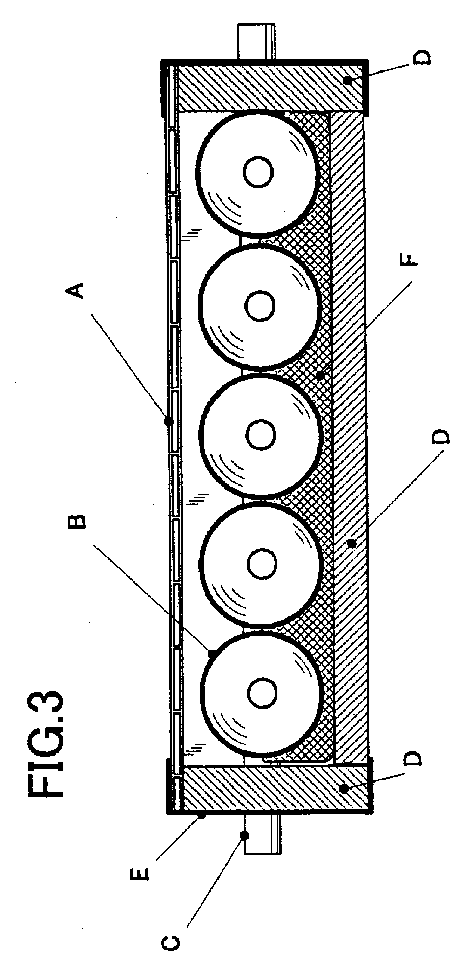

Detailed parts of the solar energy absorber are not shown in Fig. 1. Thus, the detailed parts will be explained with reference to a transverse sectional view of Fig. 3. The transparent cover plate A is provided on the heat collection side to close the opening part. An air layer and the heat collection tubes B, whose heat collection faces are respectively coated with the heat-absorbing layers, e.g., heat-absorbing films, are provided under the transparent cover plate A. The heat collection tubes B are accommodated in the box D, and the lower parts of the heat collection tubes B, which are located on the opposite side of the heat collection side, contact the heat insulating material F.

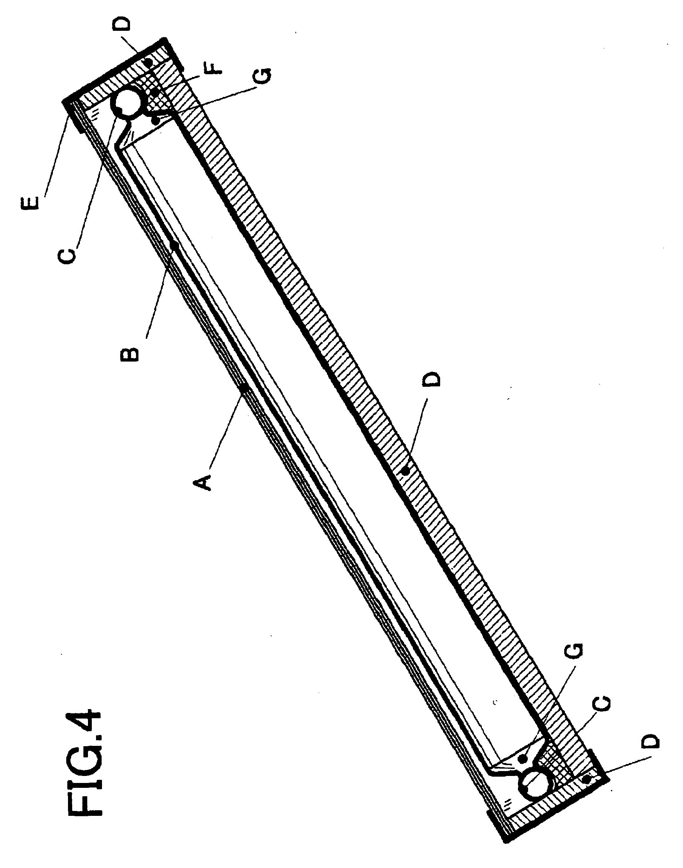

A longitudinal sectional view of the solar energy absorber is shown in Fig. 4. The end plates G closing the upper ends of the heat collection tubes B are connected to the upper header pipe C; the end plates G closing the lower ends of the heat collection tubes B are connected to the lower header pipe C. With this structure, the water-flowing section is integrated. The heat collection faces of the heat collection tubes B are respectively coated with the heat-absorbing layers, e.g., heat-absorbing films, and the lower parts of the heat collection tubes B, which are located on the opposite side of the heat collection faces, contact the heat insulating material F. The transparent cover plate A, which is composed of the transparent multilayer plastic, covers the opening part of the heat-retaining box D.

### (Example 1)

Example 1 of the solar energy absorber relating to the present invention will be explained.

As shown in Fig. 2, five heat collection tubes B, each of which is composed of stainless steel and has a length of 900 mm, a thickness of 0.5 mm and a diameter of 70 mm, are arranged parallel. The funnel-shaped end plates G are bonded to the ends of the heat collection tubes B. The upper end plates G and the lower end plates G are respectively welded and connected to the header pipes C, so that the integrated water-flowing section can be formed.

Therefore, the entire water-flowing section has a tubular structure and can resist pressure of 1.0 MPa, which is twice as high as an ordinary pressure of tap water, i.e., 0.5 MPa. A capacity of the water-flowing section is about 20 liters.

The heat collection faces are respectively coated with the heat-absorbing layers by applying a black coating material or vacuum-depositing chrome layer thereon.

As shown in the sectional view of Fig. 3, a bottom plate and side walls of the heat-retaining box D are composed of urethane foam, and the upper opening part of the heat-retaining box D is opened. The heat-retaining box D has a thickness of 10 mm, a depth of 80 mm, a width of 400 mm and a length of 1000 mm.

The glass wool insulating material F, which has a thickness of 30 mm, is provided on the inner bottom face of the heat-retaining box D, and the water-flowing section is mounted on the insulating material F, so that the lower parts (the lower parts of the outer circumferential faces) of the heat collection tubes B, which are located on the opposite side of the heat collection faces, contact the heat insulating material F.

With this structure, heat release from the lower parts of the outer circumferential faces of the heat collection tubes B, which is caused by air convection, can be decreased by half.

The transparent cover plate A, which is a multilayer polycarbonate plate having a thickness of 10 mm, a width of 400 mm and a length of 1000 mm, covers the opening part (the heat collection side) of the heat-retaining box D without contacting the heat collection tubes B.

By employing the polycarbonate plate, a weight of the cover plate A can be reduced. Note that, if the cover plate A is a single-layer sheet, the surface (heat receiving surface) of the cover plate cannot resist a load of, for example, fallen snow. However, in the present example, by employing the multilayer cover plate A composed of polycarbonate, the resistance to the load can be highly improved.

By attaching the cover plate A, the solar energy absorber of the present example is completed.

Note that, the heat-retaining box D and the heat insulating material F may be composed of urethane foam and integrally formed. In this case, a configuration of the inner bottom face is corresponded to the lower parts (the lower parts of the outer circumferential faces) of the heat collection tubes B, so that the lower parts can be fitted to the urethane foam insulating material.

Actual flow of heated water will be explained with reference to Fig. 2. A water supply pipe is connected to a water inlet H of the lower header pipe C, and the other end I of the lower header pipe C is closed by a cap. A water outlet K of the upper header pipe C is located at a diagonal position with respect to the water inlet H, and the other end J of the upper header pipe C is closed by a cap. With this structure, tap water can be supplied to the heat collection tubes B from the water inlet H, and the heated water can be discharged from the water outlet K. Therefore, the example can be used as the solar energy absorber.

The heat collection tubes B are heated by the solar heat, and the water stored in the heat collection tubes B is heated. By opening a water faucet attached to the water outlet K, the heated water, which has filled the heat collection tubes B, is pushed out by pressure of the tap water supplied to the heat collection tubes B via the lower header pipe C, so that the heated water can be efficiently discharged.

As shown in Figs. 3 and 4, the transparent multilayer cover plate A, which is composed of polycarbonate, covers the opening part of the heat-retaining box D, so that heat release from the surface of the solar energy absorber can be prevented and temperature of the heated water stored in the heat collection tubes B can be maintained. Heat release from the bottom plate and the side walls of the heat-retaining box D can be prevented by the insulating material composed of urethane foam. Further, the lower parts (the lower parts of the outer circumferential faces) of the heat collection tubes B contact the heat insulating material F, so that heat release from the outer circumferential faces of the heat collection tubes B, which is caused by air convection, can be highly restrained and reducing temperature of the heated water can be highly restrained.

Therefore, the solar energy absorber of the present example has enough functions.

By highly improving heat-retaining property, the water-flowing section including the heat collection tubes B can be used as water storing tanks. Therefore, the solar energy absorber of the present invention can be lightened and downsized, and its functions can be improved.

### (Example 2)

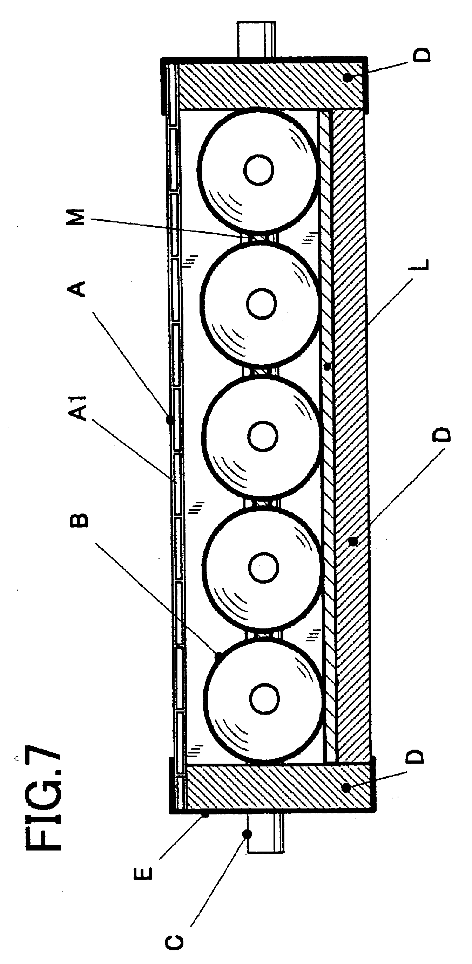

Example 2 of the solar energy absorber relating to the present invention will be explained with reference to Fig. 7. Fig. 7 is a transverse sectional view of the solar energy absorber.

The lower parts (the lower parts of the outer circumferential faces) of the heat collection tubes B contact a vacuum heat insulating material L.

Since the heat collection tubes B contact the vacuum heat insulating material L, the heat collection tubes B can be suitably held and heat transmission caused by the contact can be highly restrained. Therefore, the heat-retaining property of the solar energy absorber can be highly improved.

In Example 2, a bottom part of the heat-retaining box D, which is composed by a glass wool heat insulating material, is covered with the vacuum heat insulating material L. Further, inner faces of side walls of the heat-retaining box D are also covered with the glass wool heat insulating material. However, the structure of the heat-retaining box D is not limited to that of Example 2. For example, the inner faces may be covered with the vacuum heat insulating material L as well as the bottom part.

As shown in Fig. 7, gaps between the adjacent heat collection tubes B are air-tightly sealed, by sealing members M, so as to restrain air convection. Further, gaps between the end plates G and the inner faces of the upper and lower side walls of the heat-retaining box D may be filled with the heat insulating material F, as shown in Fig. 4, so as to prevent air current.

With this structure, spaces enclosed by the heat collection tubes B, the sealing members M and the vacuum heat insulating material L are closed, so that air convection can be restrained and the heat-retaining property can be highly improved.

Further, as shown in Fig. 7, the transparent cover plate A, which closes the opening part of the heat-retaining box D, includes an intermediate hollow layer Al. By forming the intermediate hollow layer Al, heat transmission can be highly restrained and the heat-retaining property can be highly improved without worsening heat-collecting property. Namely, the performance of the solar energy absorber can be improved.

Further, the intermediate hollow layer Al may be air-tightly closed and depressurized so as to further improve the heat-retaining property.

All examples and conditional language recited herein are intended for explanatory purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alternations could be made hereto without departing from the scope of the invention.

## Claims

1. A solar energy absorber capable of heating water with solar energy, said solar energy absorber comprising:
a water-flowing section including a plurality of heat collection tubes (B), which are composed of stainless steel and each of which has an upper end and a lower end, an upper connecting pipe (C), which is horizontally arranged and whose diameter is smaller than that of the heat collection tubes (B), and a lower connecting pipe (C), which is horizontally arranged and whose diameter is smaller than that of the heat collection tubes (B);
a heat-retaining box (D) accommodating said water-flowing section (B, C), said heat-retaining box (D) including a heat insulating material (F) and having an opening part which is located on the heat collection side; and
a cover plate (A) being composed of a transparent multilayer plastic, said cover plate (A) closing the opening part of said heat-retaining box (D) without contacting the heat collection tubes (B),
wherein a plurality of the heat collection tubes (B) are arranged parallel,
wherein the upper ends of the heat collection tubes (B) are respectively closed by upper end plates (G), the lower ends of the heat collection tubes (B) are respectively closed by lower end plates (G), the upper end plates (G) are connected to the upper connecting pipe (C) and the lower end plates (G) are connected to the lower connecting pipe (C) so as to integrate the heat collection tubes,
wherein each of the heat insulating tubes (B) is coated with a heat-absorbing layer, and
wherein parts of the heat collection tubes (B) which are located on the opposite side of the heat collection side contact the heat insulating material (F).

2. The solar energy absorber according to claim 1,
wherein the heat insulating material is a vacuum heat insulating material (L).

3. The solar energy absorber according to claim 1 or 2,
wherein gaps between the heat collection tubes (B) are air-tightly sealed, by sealing members (M), so as to restrain air convection.

4. The solar energy absorber according to one of claims 1-3,
wherein the cover plate (A) includes an intermediate hollow layer (Al).

5. The solar energy absorber according to claim 4,
wherein the intermediate hollow layer (Al) is air-tightly closed and depressurized.
